# EUROPÄISCHE PATENTSCHRIFT

(11) **EP 1 935 681 B1**
(45) Veröffentlichungstag und Bekanntmachung des Hinweises auf die Patenterteilung: **24.02.2010**
(21) Anmeldenummer: 07119763.6
(22) Anmeldetag: 31.10.2007
(51) Int. Cl.: B60H 1/00

(54) **Verfahren und System zum Erkennen von Feuchtigkeit und zur Steuerung der Klimatisierung in einem Kraftfahrzeug**
Method and system for detecting humidity and for controlling the air conditioning in a motor vehicle
Procédé et système de reconnaissance d'humidité et de commande de climatisation dans un véhicule automobile

(30) Priorität: 22.12.2006 DE 102006061266
(43) Veröffentlichungstag der Anmeldung: 25.06.2008
(73) Patentinhaber: ROBERT BOSCH GMBH, 70442 Stuttgart (DE)
(72) Erfinder: Neubauer, Mario, 76473 Iffezheim (DE)

(56) Entgegenhaltungen:
- EP-A- 0 950 587
- DE-A1-102004 055 060
- DE-A1-102005 006 472
- US-A- 4 867 561

## Beschreibung

Die vorliegende Erfindung betrifft ein Verfahren und ein System zum Erkennen von Feuchtigkeit in der Umgebung eines Kraftfahrzeugs und zur Steuerung der Klimatisierung in einem Kraftfahrzeug.

### Stand der Technik

Aus dem Stand der Technik sind Verfahren bzw. Sensoren zum Erkennen von Feuchtigkeit wie z.B. Regen oder Nebel in der Umgebung eines Kraftfahrzeugs hinlänglich bekannt.

Ebenso sind aus dem Stand der Technik Verfahren bzw. Sensoren bekannt, welche die das Kraftfahrzeug umgebende Wärmestrahlung bzw. Wärmemenge detektieren, und in Abhängigkeit von der Wärmemenge die Klimatisierung im Fahrzeuginnenraum steuern. Dabei sind auch solche Verfahren bekannt, welche mehrere Sensoren benutzen, um die von unterschiedlichen Seiten auf das Kraftfahrzeug eintreffende Wärmestrahlung zu messen und entsprechend die Klimatisierung im Fahrzeuginnenraum bereichsweise unterschiedlich zu steuern, z.B. für die Fahrerseite und die Beifahrerseite (so genannte Zwei-Zonen-Klimatisierung).

In der Druckschrift DE 10 2004 055 060 A1 ist zum Beispiel eine Sensoranordnung insbesondere für den Gebrauch in einem Kraftfahrzeug beschrieben, wobei durch die Sensoren dieser Anordnung die Richtung von elektromagnetischer Strahlung ermittelt werden kann, und für die Steuerung einer Klimaanlage im Kraftfahrzeug benutzt werden kann.

In der Druckschrift DE 10 2005 006 472 ist noch ein Beispiel einer Sensoranordnung für den Gebrauch in einem Kraftfahrzeug beschrieben.

Bei modernen Kraftfahrzeugen sind in der Regel beide Typen von Sensoren bereits serienmäßig eingebaut. Nachteilig dabei ist, dass die Kosten für ein Kraftfahrzeug umso höher sind, je mehr Sensoren in einem Kraftfahrzeug verbaut sind. Außerdem ist auch der Montageaufwand entsprechend höher.

### Offenbarung der Erfindung

Technische Aufgabe

Es ist deshalb eine Aufgabe der vorliegenden Erfindung, die Nachteile des Standes der Technik zu umgehen, und ein kostengünstigeres, einfacheres und verbessertes Verfahren und ein System sowohl zum Erkennen von Feuchtigkeit als auch zur Steuerung der Klimatisierung in einem Kraftfahrzeug bereitzustellen.

### Technische Lösung

Diese Aufgabe wird durch die Merkmale des Verfahrensanspruchs 1 und des Systemanspruch 5 gelöst.

Hierzu schlägt die Erfindung unter einem ersten Aspekt ein Verfahren zum Erkennen von Feuchtigkeit in der Umgebung eines Kraftfahrzeugs und zur Steuerung der Klimatisierung in dem Kraftfahrzeug vor, umfassend ein Regensensorsystem und ein Lichtsensorsystem, wobei die folgenden Schritte ausgeführt werden: Detektieren einer Wärmemenge in der Umgebung des Kraftfahrzeugs mittels des Regensensorsystems; Detektieren von Licht in der Umgebung des Kraftfahrzeugs mittels des Lichtsensorsystems; Ausgeben wenigstens eines Signals (S) von dem Regensensorsystem in Abhängigkeit von der detektierten Wärmemenge an eine Steuerung; Ausgeben wenigstens eines Signals (S') von dem Lichtsensorsystem in Abhängigkeit von dem detektierten Licht an die Steuerung; Steuern einer das Klima im Kraftfahrzeuginneren beeinflussenden Vorrichtung auf der Grundlage einer Kombination der Signale (S, S') mittels der Steuerung.

Unter einem zweiten Aspekt schlägt die Erfindung ein Sensorsystem zum Erkennen von Feuchtigkeit in der Umgebung des Kraftfahrzeugs und zur Steuerung der Klimatisierung in einem Kraftfahrzeug vor, umfassend: ein Regensensorsystem, welches dazu ausgelegt ist, eine Wärmemenge in der Umgebung des Kraftfahrzeugs zu detektieren und wenigstens ein Signal (S) in Abhängigkeit von der detektierten Wärmemenge auszugeben; ein Lichtsensorsystem, welches dazu ausgelegt ist, Licht in der Umgebung des Kraftfahrzeugs zu detektieren und wenigstens ein Signal (S') in Abhängigkeit von dem detektierten Licht auszugeben; und eine Steuerung, welche mit dem Regensensorsystem und dem Lichtsensorsystem in Verbindung steht und die Signale (S, S') empfängt; wobei die Steuerung eine das Klima im Kraftfahrzeuginneren beeinflussende Vorrichtung steuert, und zwar auf der Grundlage einer Kombination der Signale (S, S').

### Vorteilhafte Wirkungen

Der Vorteil des erfindungsgemäßen Verfahrens bzw. Systems ergibt sich daraus, dass mit einem einzigen Verfahren bzw. Sensorsystem sowohl die Erkennung von Feuchtigkeit, wie z.B. auf das Kraftfahrzeug auftreffender Regen, durchgeführt werden kann, als auch die auf das Kraftfahrzeug auftreffende Wärmestrahlung gemessen werden kann, um die Klimatisierung des Fahrzeuginnenraums zu steuern. Als Grundlage für das Sensorsystem kann sowohl ein bereits vorhandenes Regensensorsystem als auch ein bereits vorhandenes Lichtsensorsystem einschließlich der jeweils dazu gehörigen Verkabelung benutzt werden, so dass eine zusätzliche separate Wärmesensorik, die eigenen Bauraum einnimmt und separat verkabelt werden muss, entfällt. Dies spart Kosten und Bauraum.

Dabei wird bevorzugt, dass das Lichtsensorsystem eine Vielzahl von lichtempfindlichen Empfängern umfasst, um so ein relativ genaues Detektieren des auf das Kraftfahrzeug auftreffenden Lichts zu ermöglichen.

Vorzugsweise empfangen die Empfänger des Lichtsensorsystems jeweils Licht aus unterschiedlichen Raumbereichen der Umgebung des Kraftfahrzeugs, wobei die Empfänger jeweils ein Signal (S', S') an die Steuerung ausgeben, und zwar zusätzlich in Abhängigkeit von den den Empfängern zugeordneten unterschiedlichen Raumbereichen der Umgebung des Kraftfahrzeugs. Somit ist es möglich, die Richtung, aus der das Licht vorzugsweise kommt, zu ermitteln.

Weiterhin wird bevorzugt, dass die Steuerung das Klima im Kraftfahrzeuginneren für verschiedene Bereiche des Kraftfahrzeuginneren unterschiedlich steuert, und zwar auf der Grundlage der Signale (S', S') von den Empfängern des Lichtsensorsystems und des Signals (S) von dem Regensensorsystem in Abhängigkeit von der detektierten Wärmemenge. Auf diese Weise ist es möglich, dass entsprechende z.B. von der Sonne besonders stark aufgeheizte Bereiche im Fahrzeuginnenraum gezielter klimatisiert werden können.

### Kurze Beschreibung der Zeichnungen

Nachfolgend wird die Erfindung anhand von Figuren näher erläutert. Hierbei zeigt:
Figur 1 eine schematische Querschnittsansicht des erfindungsgemäßen Sensorsystems, mit welchem das erfindungsgemäße Verfahren angewendet werden kann;
Figur 2a eine schematische Gesamtansicht des erfindungsgemäßen Sensorsystems, mit welchem das erfindungsgemäße Verfahren angewendet werden kann; und
Figur 2b eine Detailansicht einer Ausführungsform des erfindungsgemäßen Sensorsystems.

### Ausführungsformen der Erfindung

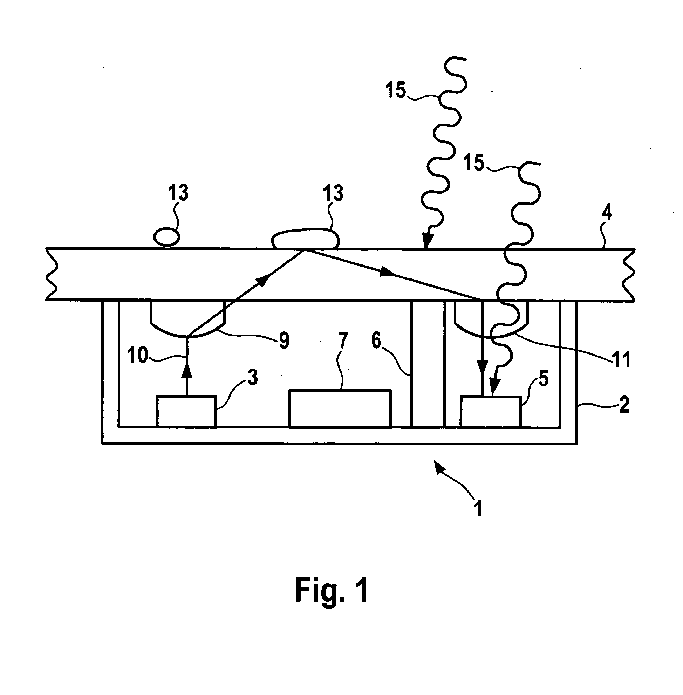

In Figur 1 ist im Querschnitt schematisch ein Sensorsystem 1 dargestellt, welches sowohl zur Erkennung von Regen bzw. Feuchtigkeitströpfchen 13, 13 außerhalb des Fahrzeugs als auch zur Steuerung der Klimatisierung eines Kraftfahrzeuginnenraums verwendbar ist.

Dazu sind in einem Gehäuse 2, welches an einem transparenten Karosserieteil, wie z.B. einer Windschutzscheibe 4, angebracht ist, sowohl ein Regensensorsystem als auch ein Lichtsensorsystem angeordnet.

Das Regensensorsystem bzw. der Regensensor umfasst in an sich bekannter Weise einen Sender 3, einen Empfänger 5 und eine Steuerung 7, welche sowohl mit dem Sender 3 als auch mit dem Empfänger 5 in Verbindung steht. Der Sender 3 ist im dargestellten Beispiel eine LED, welche elektromagnetische Strahlung im IR-Wellenlängenbereich von etwa 750 nm bis 1100 nm abstrahlt. Der Empfänger 5 ist ein im wesentlichen für IR-Strahlung empfindlicher Sensor, im dargestellten Beispiel eine Fotodiode. Es sind jedoch auch andere Arten von Sendern bzw. Empfängern denkbar, wobei die ausgestrahlte Strahlung auch in anderen Wellenlängenbereichen liegen kann, bzw. der Empfänger für andere Wellenlängenbereiche empfindlich sein kann. Als weiteres Beispiel eines Empfängers sei hier noch ein CCD genannt.

Das Lichtsensorsystem umfasst hier einen lichtempfindlichen Empfänger 6, der ebenfalls mit der Steuerung 7 in Verbindung steht. Der Empfänger 6 ist derart ausgebildet, dass er mit seiner Lichteintrittsöffnung im wesentlichen bündig mit der Windschutzscheibe 4 abschließt, um so zum einen möglichst wenig Streulicht und zum anderen nur Licht aus einer bestimmten Richtung aufzunehmen. Es ist aber auch denkbar, dass das Lichtsensorsystem mehrere Empfänger 6 umfasst, wobei die mehreren Empfänger 6 dann jeweils Licht aus einem bestimmten Raumbereich bzw. einer bestimmten Richtung aufnehmen. Auf Einzelheiten der Gestaltung der Empfänger 6 sei in diesem Fall auf die Druckschrift DE 10 2004 055 060 A1 verwiesen.

Auf die bekannte Funktion des Regensensors sei hier nur kurz eingegangen: Der Sender 3 strahlt Licht in Form eines Lichtstrahls 10 in Richtung auf die Windschutzscheibe 4 ab. Das Licht wird im dargestellten Beispiel durch ein erstes Linsenelement 9 derart gebrochen, dass Totalreflexion in der Windschutzscheibe 4 auftritt, wenn keine Regentropfen 13, 13 auf der Windschutzscheibe 4 vorhanden sind. Der reflektierte Lichtstrahl 10 wird über ein weiteres Linsenelement 11 auf den Empfänger 5 fokussiert. Es wird die volle Intensität vom Empfänger 5 gemessen.

Bei Vorhandensein von Regen- bzw. Feuchtigkeitstropfen (z.B. auch Nebeltröpfchen) wird durch die Schwächung der Totalreflexion eine verminderte Intensität von dem Empfänger 5 registriert, wobei die verminderte Intensität als Steuersignal für die Steuerung 7 genutzt wird, um z.B. Scheibenwischer zu steuern.

In einer weiteren Funktion detektiert der Regensensor nur Wärmestrahlung bzw. eine Wärmemenge, hier angedeutet durch einen gewellten Pfeil 15, aus der Umgebung des Kraftfahrzeugs. Im dargestellten Beispiel wird dies dadurch erzielt, dass die Abstrahlung von elektromagnetischer Strahlung durch den Sender 3 unterbunden wird, z.B. durch Abschalten der Energieversorgung für den Sender 3 oder durch Abschatten des Senders 3.

Da der Empfänger 5 im Wesentlichen empfindlich für den IR-Bereich ist, ist ein vom Empfänger 5 an die Steuerung 7 ausgegebenes Signal S proportional zur außerhalb des Fahrzeugs herrschenden Wärmestrahlung.

Gleichzeitig gibt der Empfänger 6 ein Signal S' in Abhängigkeit von der Richtung des eintreffenden Lichts an die Steuerung 7.

Die Signale S und S', d.h. die Kombination aus Wärmemengenwert und Lichtrichtungsinformation, werden nun von der Steuerung 7 dazu genutzt, um z.B. eine das Klima des Kraftfahrzeugs beeinflussende Einrichtung zu steuern, um eine vorbestimmte Klimatisierung im Fahrzeuginneren zu erzielen bzw. aufrechtzuerhalten.

Natürlich kann das Lichtsensorsystem in bekannter Weise auch dazu genutzt werden, z.B. die Scheinwerfer des Fahrzeugs in Abhängigkeit von bestimmten Lichtintensitätswerten (z.B. Dämmerung, Tunnel etc.) zu steuern.

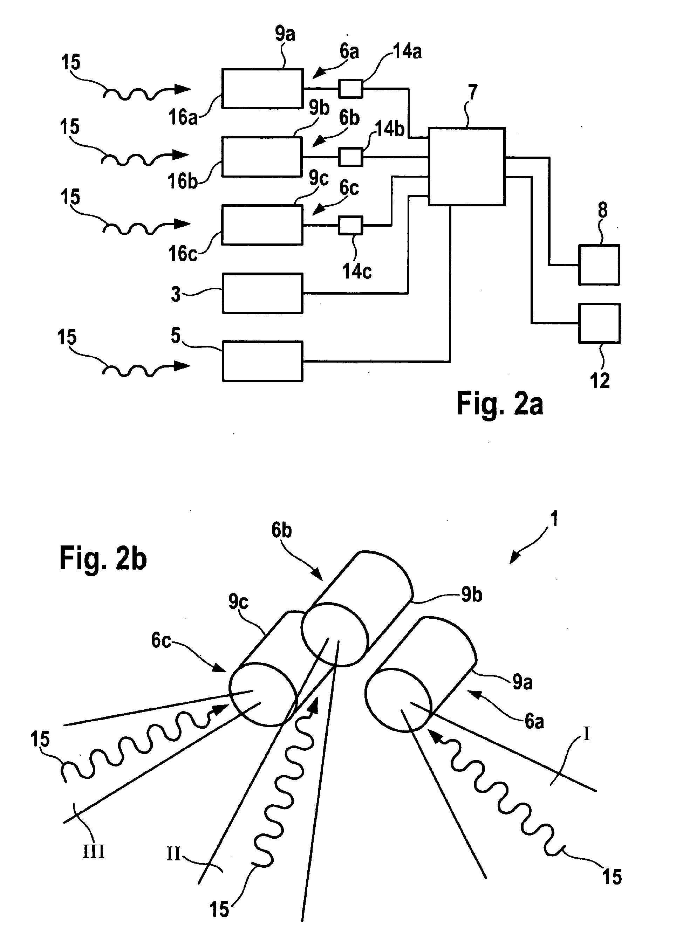

Figur 2a zeigt eine schematische Gesamtansicht eines Sensorsystems 1 mit einem Lichtsensorsystem bestehend aus drei Lichtsensorsystem-Empfängern 6a, 6b, 6c und einem Regensensorsystem bestehend aus einem Sender 3 und einem Empfänger 5.

Der Empfänger 5 und der Sender 3 sind jeweils in Verbindung mit einer Steuerung 7. Zum einen können Sender 3 und Empfänger 5 zusammen als Regensensor betrieben werden, wobei Steuerung 7 dann eine Scheibenwischereinrichtung 12 steuert. Zum anderen kann Empfänger 5 aber auch nur Wärmestrahlung 15 empfangen, und ein entsprechendes Signal S an Steuerung 7 senden.

Die Lichtsensorsystem-Empfänger 6a, 6b, 6c umfassen jeweils einen richtungssensitiven Strahlungsleitkörper 9a, 9b, 9c und ein strahlungsempfindliches Element 14a, 14b, 14c. Die von den Empfängern 6a, 6b, 6c zu detektierende Licht-Strahlung 15 tritt durch Öffnungen 16a, 16b, 16c der Strahlungsleitkörper 9a, 9b, 9c in diese ein, und wird von den strahlungsempfindlichen Elementen 14a, 14b, 14c detektiert. Die strahlungsempfindlichen Elementen 14a, 14b, 14c geben dann der detektierten Strahlung entsprechende Signale S' an die Steuerung 7, welche dann eine Klimaanlage 8 und/oder auch weitere angeschlossene Vorrichtungen (hier nicht dargestellt) steuert. Für weitere Einzelheiten hinsichtlich der Beschreibung der richtungssensitiven Strahlungsleitkörper 9a, 9b, 9c und der strahlungsempfindlichen Elemente 14a, 14b, 14c sei hier noch mal auf den Inhalt der Druckschrift DE 10 2004 055 060 A1 verwiesen. Es sei jedoch bemerkt, dass die Empfänger 6a, 6b, 6c auch andersartig ausgelegt sein können, um Licht aus unterschiedlichen Bereichen der Umgebung des Kraftfahrzeugs detektieren zu können.

Die Lichtsensorsystem-Empfänger 6a, 6b, 6c empfangen Licht 15 aus unterschiedlichen Richtungen, und geben jeweils ein Signal S' an Steuerung 7. Auf der Grundlage einer Kombination der Signale S und S' steuert die Steuerung 7 eine Klimaanlage 8.

Figur 2b zeigt eine Detailansicht des erfindungsgemäßen Sensorsystems 1 mit drei Lichtsensorsystem-Empfängern 6a, 6b, 6c in perspektivischer Darstellung. Die Darstellung ist hierbei so gewählt, dass der Betrachter das Lichtsensorsystem im in einem Kraftfahrzeug eingebauten Zustand von schräg oben sieht. Z.B. kann das Lichtsensorsystem am oberen Rand einer Windschutzscheibe von innen angebracht sein. Aus Gründen der Übersichtlichkeit wurde hier aber auf die Darstellung der übrigen Komponenten wie Gehäuse, Regensensorsystem, Steuerung etc. verzichtet.

Von den Lichtsensorsystem-Empfängern 6a, 6b, 6c sind jeweils nur die richtungssensitiven Strahlungsleitkörper 9a, 9b, 9c dargestellt; auf die Darstellung der strahlungsempfindlichen Elemente wurde verzichtet.

Die drei Empfänger 6a, 6b, 6c sind im dargestellten Beispiel derart ausgelegt, dass jeder Empfänger nur Lichtstrahlung 15, 15, 15 aus einem bestimmten, dem jeweiligen Empfänger zugeordneten Raumbereich empfängt. Dem Empfänger 6a ist hier ein Raumbereich I zugeordnet, dem Empfänger 6b ein Raumbereich II und dem Empfänger 6c ein Raumbereich III. Raumbereich I entspricht im dargestellten Beispiel im wesentlichen der linken Seite des Kraftfahrzeugs (bezogen auf Fahrer bzw. Beifahrer), Raumbereich II entspricht dem vor dem Kraftfahrzeug befindlichen Bereich und Raumbereich III entspricht der rechten Seite des Kraftfahrzeugs. Die Richtungswirkung der Empfänger 6a, 6b, 6c wird durch entsprechende Linsenoptiken (nicht dargestellt) erzielt, wobei die Größe des erfassten Raumbereichs beliebig variiert werden kann.

Strahlt die Sonne zum Beispiel mehr von der linken Seite des Kraftfahrzeugs ein, registriert der Empfänger 6a mehr Licht-strahlung als die anderen Empfänger 6b bzw. 6c. Auf der Grundlage eines von dem Empfänger 6a an die Steuerung 7 ausgegebenen Signals S'₆ₐ veranlasst dann die Steuerung 7 in Kombination mit einem vom Regensensor-Empfänger gemessenen erhöhten Wärmemengenwert, dass der der höheren Wärmestrahlung zugewandte Bereich des Fahrzeuginnenraums (in diesem Fall der linke Innenraumbereich) entsprechend mehr klimatisiert, d.h. gekühlt wird. Entsprechendes gilt für die Empfänger 6b, 6c, wobei dem Empfänger 6b bzw. einem vom Empfänger 6b ausgegebenen Signal S'_{6b} der vordere Bereich des Fahrzeuginnenraums zugeordnet ist, und dem Empfänger 6c der rechte Fahrzeuginnenraumbereich.

Es sei bemerkt, dass die Zuordnung verschiedener Fahrzeuginnenraumbereiche zu den einzelnen Empfängern auch die Fondbereiche des Innenraums umfassen kann, und dass auch mehr als drei Lichtsensorsystem-Empfänger verwendet werden können.

## Patentansprüche

1. Verfahren zum Erkennen von Feuchtigkeit in der Umgebung eines Kraftfahrzeugs und zur Steuerung der Klimatisierung in dem Kraftfahrzeug, umfassend ein Regensensorsystem und ein Lichtsensorsystem, wobei die folgenden Schritte ausgeführt werden:
- Detektieren einer Wärmemenge in der Umgebung des Kraftfahrzeugs mittels des Regensensorsystems;
- Detektieren von Licht in der Umgebung des Kraftfahrzeugs mittels des Lichtsensorsystems;
- Ausgeben wenigstens eines Signals (S) von dem Regensensorsystem in Abhängigkeit von der detektierten Wärmemenge an eine Steuerung (7);
- Ausgeben wenigstens eines Signals (S') von dem Lichtsensorsystem in Abhängigkeit von dem detektierten Licht an die Steuerung (7);
- Steuern einer das Klima im Kraftfahrzeuginneren beeinflussenden Vorrichtung (8) auf der Grundlage einer Kombination der Signale (S, S') mittels der Steuerung (7).

2. Verfahren nach Anspruch 1, wobei das Licht in der Umgebung des Kraftfahrzeugs mittels des Lichtsensorsystems empfangen wird, wobei das Lichtsensorsystem eine Vielzahl von lichtempfindlichen Empfängern (6a, 6b, 6c) umfasst.

3. Verfahren nach Anspruch 2, wobei das Licht in der Umgebung des Kraftfahrzeugs mittels der Vielzahl der Empfänger (6a, 6b, 6c) jeweils aus unterschiedlichen Raumbereichen (I, II, III) der Umgebung des Kraftfahrzeugs empfangen wird, und wobei jeweils von den Empfängern (6a, 6b, 6c) ein Signal (S', S', S') an die Steuerung ausgegeben wird, und zwar zusätzlich in Abhängigkeit von den den Empfängern (6a, 6b, 6c) zugeordneten unterschiedlichen Raumbereichen (I, II, III) der Umgebung des Kraftfahrzeugs.

4. Verfahren nach Anspruch 3, wobei das Klima im Kraftfahrzeuginneren für verschiedene Bereiche des Kraftfahrzeuginneren unterschiedlich durch die Steuerung (7) gesteuert wird, und zwar auf der Grundlage der Signale (S', S', S') von den Empfängern (6a, 6b, 6c) des Lichtsensorsystems und des Signals (S) von dem Regensensorsystem in Abhängigkeit von der detektierten Wärmemenge.

5. Sensorsystem (1) zum Erkennen von Feuchtigkeit in der Umgebung des Kraftfahrzeugs und zur Steuerung der Klimatisierung in einem Kraftfahrzeug, umfassend:
- ein Lichtsensorsystem, welches dazu ausgelegt ist, Licht in der Umgebung des Kraftfahrzeugs zu detektieren und wenigstens ein Signal (S') in Abhängigkeit von dem detektierten Licht auszugeben; **gekennzeichnet durch**
- ein Regensensorsystem, welches dazu ausgelegt ist, eine Wärmemenge in der Umgebung des Kraftfahrzeugs zu detektieren und wenigstens ein Signal (S) in Abhängigkeit von der detektierten Wärmemenge auszugeben; und
- eine Steuerung (7), welche mit dem Regensensorsystem und dem Lichtsensorsystem in Verbindung steht und die Signale (S, S') empfängt;
wobei die Steuerung (7) eine das Klima im Kraftfahrzeuginneren beeinflussende Vorrichtung (8) steuert, und zwar auf der Grundlage einer Kombination der Signale (S, S').

6. Sensorsystem (1) nach Anspruch 5, wobei das Lichtsensorsystem eine Vielzahl von lichtempfindlichen Empfängern (6a, 6b, 6c) umfasst.

7. Sensorsystem (1) nach Anspruch 6, wobei die Empfänger (6a, 6b, 6c) des Lichtsensorsystems jeweils Licht aus unterschiedlichen Raumbereichen (I, II, III) der Umgebung des Kraftfahrzeugs empfangen, und wobei die Empfänger (6a, 6b, 6c) jeweils ein Signal (S', S', S') an die Steuerung (7) ausgeben, und zwar zusätzlich in Abhängigkeit von den den Empfängern (6a, 6b, 6c) zugeordneten unterschiedlichen Raumbereichen (I, II, III) der Umgebung des Kraftfahrzeugs.

8. Sensorsystem (1) nach Anspruch 7, wobei die Steuerung (7) das Klima im Kraftfahrzeuginneren für verschiedene Bereiche des Kraftfahrzeuginneren unterschiedlich steuert, und zwar auf der Grundlage der Signale (S', S', S') von den Empfängern (6a, 6b, 6c) des Lichtsensorsystems und des Signals (S) von dem Regensensorsystem in Abhängigkeit von der detektierten Wärmemenge.

## Claims

1. Method for detecting humidity in the area surrounding a motor vehicle and for controlling the air conditioning in the motor vehicle, comprising a rain sensor system and a light sensor system, the following steps being carried out:
- the rain sensor system is used to detect a quantity of heat in the area surrounding the motor vehicle;
- the light sensor system is used to detect light in the area surrounding the motor vehicle;
- the rain sensor system outputs at least one signal (S) to a controller (7) on the basis of the detected quantity of heat;
- the light sensor system outputs at least one signal (S') to the controller (7) on the basis of the detected light;
- the controller (7) is used to control an apparatus (8), which influences the climate in the interior of the motor vehicle, on the basis of a combination of the signals (S, S').

2. Method according to Claim 1, the light sensor system being used to receive the light in the area surrounding the motor vehicle, the light sensor system comprising a multiplicity of light-sensitive receivers (6a, 6b, 6c).

3. Method according to Claim 2, the multiplicity of receivers (6a, 6b, 6c) each being used to receive the light in the area surrounding the motor vehicle from different spatial regions (I, II, III) of the area surrounding the motor vehicle, and the receivers (6a, 6b, 6c) each outputting a signal (S', S', S') to the controller, to be precise additionally on the basis of the different spatial regions (I, II, III) of the area surrounding the motor vehicle, which spatial regions are associated with the receivers (6a, 6b, 6c).

4. Method according to Claim 3, the climate in the interior of the motor vehicle being controlled differently by the controller (7) for different regions of the interior of the motor vehicle, to be precise on the basis of the signals (S', S', S') from the receivers (6a, 6b, 6c) of the light sensor system and the signal (S) from the rain sensor system on the basis of the detected quantity of heat.

5. Sensor system (1) for detecting humidity in the area surrounding the motor vehicle and for controlling the air conditioning in a motor vehicle, comprising:
- a light sensor system which is designed to detect light in the area surrounding the motor vehicle and to output at least one signal (S') on the basis of the detected light;
**characterized by**
- a rain sensor system which is designed to detect a quantity of heat in the area surrounding the motor vehicle and to output at least one signal (S) on the basis of the detected quantity of heat; and
- a controller (7) which is connected to the rain sensor system and the light sensor system and receives the signals (S, S');
the controller (7) controlling an apparatus (8) which influences the climate in the interior of the motor vehicle, to be precise on the basis of a combination of the signals (S, S').

6. Sensor system (1) according to Claim 5, the light sensor system comprising a multiplicity of light-sensitive receivers (6a, 6b, 6c).

7. Sensor system (1) according to Claim 6, the receivers (6a, 6b, 6c) of the light sensor system each receiving light from different spatial regions (I, II, III) of the area surrounding the motor vehicle, and the receivers (6a, 6b, 6c) each outputting a signal (S', S', S') to the controller (7), to be precise additionally on the basis of the different spatial regions (I, II, III) of the area surrounding the motor vehicle, which spatial regions are associated with the receivers (6a, 6b, 6c).

8. Sensor system (1) according to Claim 7, the controller (7) controlling the climate in the interior of the motor vehicle differently for different regions of the interior of the motor vehicle, to be precise on the basis of the signals (S', S', S') from the receivers (6a, 6b, 6c) of the light sensor system and the signal (S) from the rain sensor system on the basis of the detected quantity of heat.

## Revendications

1. Procédé de détection de l'humidité dans l'environnement d'un véhicule automobile et de commande de la climatisation à l'intérieur du véhicule automobile qui présente un système de détecteur de pluie et un système de détecteurs de lumière, et dans lequel les étapes suivantes sont exécutées :
- au moyen du système de détecteur de pluie, détection du niveau de chaleur présent dans l'environnement du véhicule,
- au moyen du système de détecteurs de lumière, détection de la lumière présente dans l'environnement du véhicule automobile,
- fourniture à une commande (7) par le système de détecteur de pluie d'au moins un signal (S) qui dépend du niveau de chaleur détecté,
- fourniture à la commande (7) par le système de détecteurs de lumière d'au moins un signal (S') qui dépend de la lumière détectée et
- commande au moyen de la commande (7) d'un dispositif (8) qui agit sur la climatisation à l'intérieur du véhicule automobile sur la base d'une combinaison des signaux (S, S').

2. Procédé selon la revendication 1, dans lequel la lumière présente dans l'environnement du véhicule automobile est reçue par le système de détecteurs de lumière, le système de détecteurs de lumière comprenant plusieurs récepteurs (6a, 6b, 6c) sensibles à la lumière.

3. Procédé selon la revendication 2, dans lequel la lumière présente dans l'environnement du véhicule automobile est reçue au moyen de différents récepteurs (6a, 6b, 6c) en provenance de différentes zones spatiales (I, II, III) de l'environnement du véhicule automobile, chacun des récepteurs (6a, 6b, 6c) envoyant à la commande un signal (S', S', S') qui est en outre fonction des zones spatiales (I, II, III) de l'environnement du véhicule automobile associées aux récepteurs (6a, 6b, 6c) respectifs.

4. Procédé selon la revendication 3, dans lequel sur la base des signaux (S', S', S') reçus des récepteurs (6a, 6b, 6c) du système de détecteurs de lumière et du signal (S) du système de détecteur de pluie, la climatisation à l'intérieur du véhicule automobile est commandée différemment par la commande (7) pour différentes parties de l'intérieur du véhicule automobile en fonction du niveau de chaleur détecté.

5. Système (1) de détecteurs de détection de l'humidité dans l'environnement d'un véhicule automobile et de commande de la climatisation à l'intérieur du véhicule automobile, comprenant :
- un système de détecteurs de lumière conçus pour détecter la lumière dans l'environnement du véhicule automobile et délivrer au moins un signal (S') qui dépend de la lumière détectée,
**caractérisé par**
- un système de détecteur de pluie conçu pour détecter une quantité de chaleur dans l'environnement du véhicule automobile et délivrer au moins un signal (S) qui dépend du niveau de chaleur détecté et
- une commande (7) qui communique avec le système de détecteur de pluie et le système de détecteurs de lumière et qui reçoit les signaux (S, S'),
la commande (7) commandant un dispositif (8) qui agit sur la climatisation à l'intérieur du véhicule automobile sur la base d'une combinaison des signaux (S, S').

6. Système (1) de détecteurs selon la revendication 5, dans lequel le système de détecteurs de lumière comprend plusieurs récepteurs (6a, 6b, 6c) sensibles à la lumière.

7. Système (1) de détecteurs selon la revendication 6, dans lequel les récepteurs (6a, 6b, 6c) du système de détecteurs de lumière reçoivent chacun de la lumière de différentes zones spatiales (I, II, III) de l'environnement du véhicule automobile, les récepteurs (6a, 6b, 6c) délivrant chacun un signal (S', S', S') à la commande (7) qui est en outre fonction des différentes zones spatiales (I, II, III) de l'environnement du véhicule automobile associées aux récepteurs (6a, 6b, 6c) respectifs.

8. Système (1) de détecteurs selon la revendication 7, dans lequel sur la base des signaux (S', S', S') des récepteurs (6a, 6b, 6c) du système de détecteurs de lumière et du signal (S) du système de détecteur de pluie, la commande (7) commande la climatisation à l'intérieur du véhicule automobile différemment pour différentes parties de l'intérieur du véhicule automobile en fonction du niveau de chaleur détecté.
